Europäisches Patentamt

European Patent Office

Office européen des brevets

(11) Numéro de publication: **0 356 364**
**A1**

## (12) DEMANDE DE BREVET EUROPEEN

(21) Numéro de dépôt: **89470014.5**

(22) Date de dépôt: **17.07.89**

(51) Int. Cl.5: **F 16 L 19/08**

(30) Priorité: **29.07.88 FR 8810461**
**09.11.88 FR 8815067**

(43) Date de publication de la demande:
**28.02.90 Bulletin 90/09**

(84) Etats contractants désignés:
**AT BE CH DE ES GB GR IT LI LU NL SE**

(71) Demandeur: **ST MIHIEL S.A.**
**2, rue de la Marsoupe**
**F-55300 St. Mihiel (FR)**

(72) Inventeur: **Dumez, Roger**
**9 Rue du Faubourg St. Christophe**
**F-55300 St. Mihiel (FR)**

(74) Mandataire: **Poupon, Michel**
**3, rue Thiers BP 421**
**F-88011 Epinal Cédex (FR)**

(54) **Raccord en particulier pour tubes plastiques.**

(57) Raccord en particulier pour tubes plastiques, du type comprenant un corps (1) coopérant avec un écrou press-étoupe (3), une bague de crampage, une rondelle de friction et un joint d'étanchéité, caractérisé en ce que l'écrou presse-étoupe (3), la bague de crampage (5,5') et la rondelle de friction (6,6') sont solidarisés mécaniquement en translation.

FIG. 2

EP 0 356 364 A1

Description

## RACCORD EN PARTICULIER POUR TUBES PLASTIQUES

La présente invention a pour objet un raccord en particulier pour tubes plastiques, du type comportant un corps coopérant avec un écrou presse-étoupe, une bague de crampage, une rondelle de friction et un joint d'étanchéité.

De manière habituelle, ces différents éléments se présentent sous forme dissociée et sont assemblés par l'utilisateur sur chantier.

Ceci demande donc de nombreuses manipulations avec en outre des risques de perte de l'une ou l'autre pièce et également d'installation défectueuse.

L'invention a pour objet de remédier à ces inconvénients des raccords de l'art antérieur en proposant un raccord de conception nouvelle qui soit d'utilisation simplifiée, sans risque de perte de l'un quelconque des éléments constitutifs ni de montage défectueux.

Conformément à l'invention, ce résultat est obtenu avec un raccord en particulier pour tubes plastiques, du type comprenant un corps coopérant avec un écrou presse-étoupe, une bague de crampage, une rondelle de friction et un joint d'étanchéité caractérisé en ce que l'écrou presse-étoupe, la bague de crampage et la rondelle de friction sont solidarisés mécaniquement en translation.

La solidarisation pourra être réalisée par tout moyen adéquat, par exemple par encliquetage, l'assemblage étant tel que seule la solidarisation en rotation est assurée, les trois éléments de l'ensemble restant sensiblement libres en rotation l'un par rapport à l'autre autour de leur axe commun.

Selon un mode avantageux de mise en oeuvre, la bague de crampage sera solidarisée à la fois à l'écrou presse-étoupe et à la rondelle de friction.

Les développements apportés à cette technique conduisent à envisager l'application du même type de raccord à une liaison directe avec un robinet.

En effet, sur les anciens raccords, le corps de liaison avec un robinet est d'une seule pièce et disposé pour sa fixation sur un robinet d'une sortie filetée mâle ou femelle avec un joint d'étanchéité.

Il implique donc, en sortie de robinet, des montages complexes avec en outre des brides d'acier tournantes.

Conformément à une variante de mise en oeuvre de l'invention on remédie à ces inconvénients en prévoyant un raccord en particulier pour tubes plastiques, du type comprenant un corps coopérant avec un écrou presse-étoupe, une bague de crampage, une rondelle de friction et un joint d'étanchéité, dans lequel l'écrou presse-étoupe, la bague de crampage et la rondelle de friction sont solidarisés mécaniquement en translation, caractérisé en ce que le corps est un raccord tournant monobloc serti sur la tubulure d'une sortie du corps d'un robinet.

On comprendra mieux l'invention à l'aide de la description faite ci-après d'un mode non limitatif de mise en oeuvre, donné à titre d'exemple non limitatif, en référence aux dessins annexés dand lesquels :

- la figure 1 est une demi-vue en coupe longitudinale d'un raccord conforme à l'invention ;
- la figure 3 est une demi-vue en coupe longitudinale d'une variante de mise en oeuvre, appliquée à une liaison directe avec un robinet.

De manière en elle-même connue, un raccord comporte :
- un corps (1) creux en métal ou en matière plastique comportant un filetage (2) intérieur ;
- un presse-étoupe (3) creux en métal ou en matière plastique comportant un filetage (4) extérieur.

Par vissage du presse-étoupe (3) dans le corps (1) on assure un raccord entre deux éléments de tubes, en particulier plastiques.

Pour garantir l'étanchéité et le maintien au niveau du raccord, on interpose de manière en elle-même connue entre ces deux pièces :
- une bague de crampage (5) également en métal ou en matière plastique,
- une rondelle de friction (6) en métal ou en matière plastique,
- un joint d'étanchéité (7) en caoutchouc ou en matière plastique.

Jusqu'à présent, ces éléments étaient présentés de manière dissociée.

Conformément à l'invention et pour entre autres les motifs explicités ci-dessus, on rend solidaires en translation le presse-étoupe, la bague de crampage et la rondelle de friction.

A cette fin, on prévoit sur la bague de crampage (5) deux gorges (8,9) qui coopèrent chacune avec respectivement une nervure (10) ménagée sur la rondelle de friction et une nervure (11) ménagée à l'intérieur du presse-étoupe (3).

On réalise ainsi une structure compacte, par encliquetage des trois pièces l'une dans l'autre, la bague de crampage faisant office de liaison entre le presse-étoupe et la bague de friction.

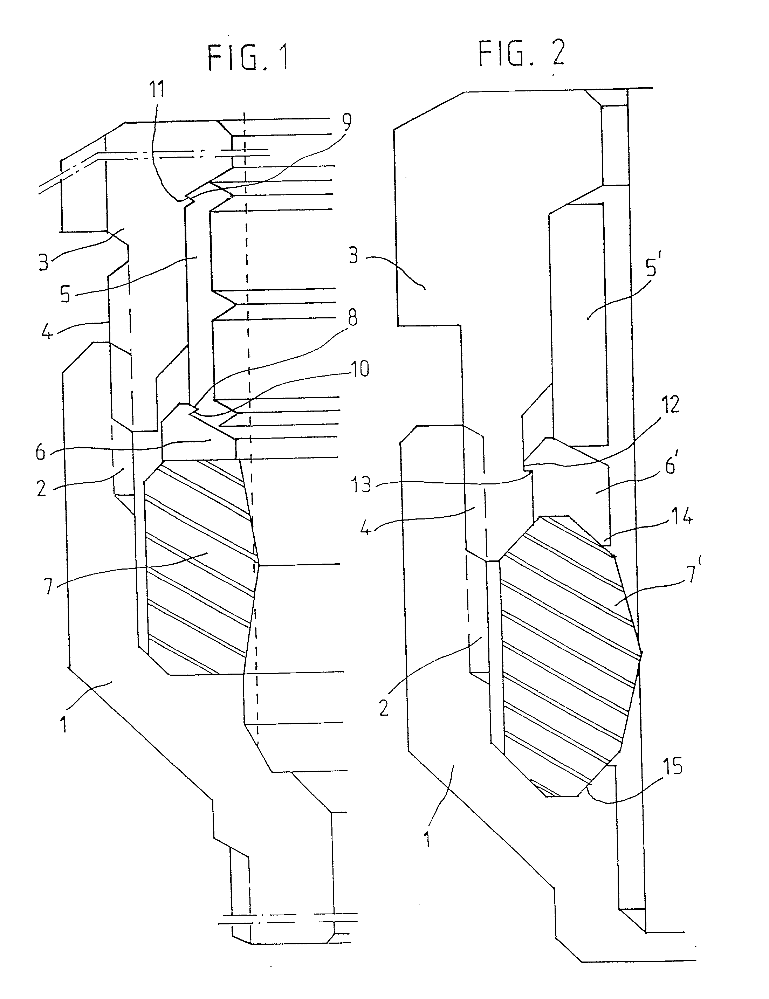

On se référera maintenant à la figure 2, les différents éléments étant référencés de manière identique.

Dans cette réalisation, la bague de crampage (5') est bloquée par la rondelle de friction (6'). La rondelle de friction (6') est maintenue dans le presse-étoupe (3) par un rebord (12) coopérant avec une nervure (13) dudit presse-étoupe.

La rondelle de friction vient coiffer par sa partie frontale le chant supérieur du joint (7') et comporte à cette fin une portée (14) qui enveloppe celui-ci du côté de l'intérieur du raccord.

A sa partie inférieure (par rapport au dessin) le joint (7') est logé dans une gorge (15) du corps (1) qui l'y maintient.

Le joint est ainsi parfaitement positionné et maintenu.

Cette structure est particulièrement avantageuse pour le cas où les tuyaux à raccorder sont coupés en biais.

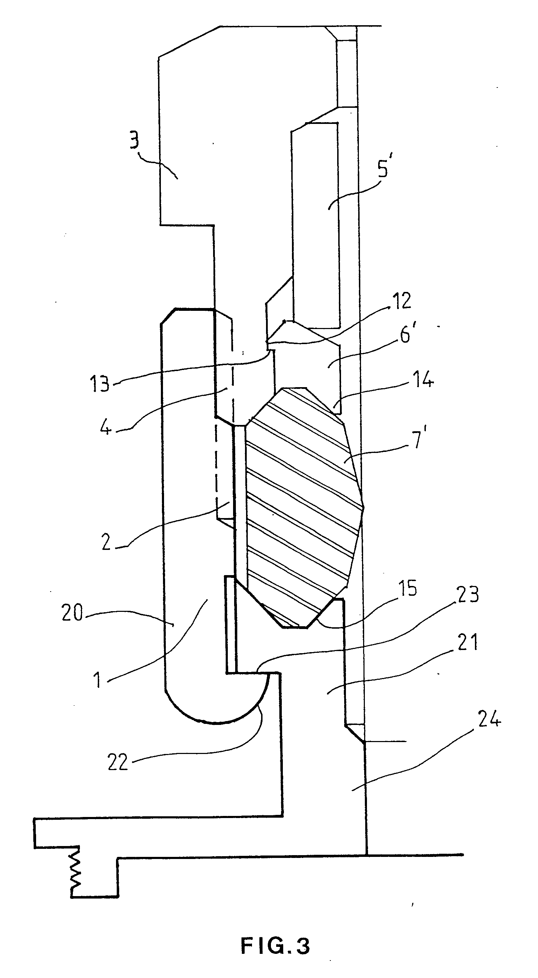

Selon la variante de mise en oeuvre de la figure 3, le corps (1) est ici constitué en fait par :
- un corps de raccord tournant (20) ;
- une tubulure (21) sur laquelle ledit raccord est serti par un mentonnet (22) du raccord coopérant à cette fin avec une collerette (23) de la tubulure.

La tubulure (21) constitue, selon l'invention, la sortie du corps (24) d'un robinet non représenté.

On obtient ainsi, avec une sortie de corps de robinet en forme de tubulure et un corps de raccord serti sur ladite tubulure, un ensemble tournant permettant de rendre monobloc le raccord et le corps du robinet.

Les structures des figures 1 et 2 peuvent être toutes deux transposées à cette conformation.

## Revendications

1. Raccord en particulier pour tubes plastiques, du type comprenant un corps (1) coopérant avec un écrou presse-étoupe (3), une bague de crampage, une rondelle de friction et un joint d'étanchéité, caractérisé en ce que l'écrou presse-étoupe (3), la bague de crampage (5,5') et la rondelle de friction (6,6') sont solidarisés mécaniquement en translation.

2. Raccord selon la revendication 1, caractérisé en ce que la solidarisation est assurée de manière telle que seule la solidarisation en rotation est assurée, les trois éléments de l'ensemble restant sensiblement libres en rotation l'un par rapport à l'autre autour de leur axe commun.

3. Raccord selon l'une quelconque des revendications 1 et 2, caractérisé en ce que la bague de crampage est solidarisée à la fois à l'écrou presse-étoupe (3) et à la rondelle de friction (6).

4. Raccord selon la revendication 3, caractérisé en ce que la bague de crampage (5) comporte deux gorges (8,9) qui coopèrent chacune avec respectivement une nervure (10) ménagée sur la rondelle de friction et une nervure (11) ménagée à l'intérieur du presse-étoupe (3), pour un assemblage par encliquetage.

5. Raccord selon l'une quelconque des revendications 1 et 2, caractérisé en ce que la bague de crampage (5') est bloquée par la rondelle de friction (6'), la rondelle de friction (6') étant maintenue dans le presse-étoupe (3) par un rebord (12) coopérant avec une nervure (13) dudit presse-étoupe, ladite rondelle de friction venant coiffer par sa partie frontale le chant supérieur du joint (7') et comportant à cette fin une partie (14) qui enveloppe celui-ci du côté de l'intérieur du raccord.

6. Raccord selon la revendication 5, caractérisé en ce que à sa partie inférieur le joint (7') est logé dans une gorge (15) du corps (1) qui l'y maintient.

7. Raccord, en particulier pour tubes plastiques, du type comprenant un corps coopérant avec un écrou presse-étoupe, une bague de crampage, une rondelle de friction et un joint d'étanchéité, dans lequel l'écrou presse-étoupe, la bague de crampage et la rondelle de friction sont solidarisés mécaniquement en translation selon la revendication 1, caractérisé en ce que le corps est un raccord tournant monobloc (20) serti sur la tubulure (21) d'une sortie du corps (24) d'un robinet.

8. Raccord selon la revendication 7, caractérisé en ce que le raccord est serti sur la tubulure (21) par un mentonnet (22) dudit raccord, qui coopère à cette fin avec une collerette (23) de la tubulure.

EP 0 356 364 A1

FIG. 1    FIG. 2

EP 0 356 364 A1

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2043814 (LUCAS INDUSTRIES) <br> * revendications 1-5; figures 1, 2 * <br> --- | 1-8 | F16L19/08 |
| A | US-A-3695640 (CLAGUE) <br> * figures 2, 3 * <br> --- | 1, 7 | |
| A | DE-B-1800923 (SEILER) <br> * figures 1, 3 * <br> --- | 1 | |
| A | FR-A-2204773 (THE TUNGUM COMPANY) <br> * figure 2 * <br> --- | 1 | |
| A | DE-A-2910688 (VALVOSANITARIA DEI FRATELLI BUGATTI) <br> * figure 1 * <br> ----- | 1 | |

DOMAINES TECHNIQUES RECHERCHES (Int. Cl.5)

F16L

Le présent rapport a été établi pour toutes les revendications

| Lieu de la recherche | Date d'achèvement de la recherche | Examinateur |
|---|---|---|
| BERLIN | 07 NOVEMBRE 1989 | SCHAEFFLER C.A.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)